# EUROPEAN PATENT SPECIFICATION

(11) **EP 2 333 271 B1**
(45) Date of publication and mention of the grant of the patent: **01.08.2012**
(21) Application number: 09425489.3
(22) Date of filing: 26.11.2009
(51) Int. Cl.: F02B 21/00, F02B 29/00, F02D 17/02, F02D 13/02, F02M 23/00

(54) **Additional acceleration system for an internal combustion engine**
Zusätzliches Beschleunigungssystem für eine Verbrennungskraftmaschine
Système d'accélération additionnel pour un moteur à combustion interne

(43) Date of publication of application: 15.06.2011
(73) Proprietor: Iveco S.p.A., 10156 Torino (IT)
(72) Inventor: Stuerner, Johann, 89079 Ulm (DE); Prina, Claudio, 13900 Biella (IT); Bezze, Massimo, 10080 S. Benigno Canavese (IT)
(74) Representative: Borsano, Corrado

(56) References cited:
- EP-A2- 2 014 895
- DE-A1-102004 028 216
- DE-A1-102007 001 119
- DÖNITZ C, VASILE I, ONDER C, GUZZELLA L: "Realizing a Concept for High Efficiency and Excellent Driveability: The Downsized and Supercharged Hybrid Pneumatic Engine" SOCIETY OF AUTOMOTIVE ENGINEERS (SAE), no. 2009-01-1326, April 2009 (2009-04), XP002577055 ISSN: 0148-7191

## Description

### Application field of the invention

The present invention relates to an additional acceleration system for endothermic engine.

In particular, the invention is advantageously used for increasing the acceleration capacity of engines, preferably naturally-aspirated or turbocharged endothermic engines mounted, in non-limitative examples, on industrial vehicles for hauling goods, such as van and similar, or on automobiles, or on specialty vehicles, such as fire-fighting vehicles.

### Description of the prior art

In the field of the commercial or industrial hauling, of specialty vehicles and of automobiles, it is known the use of endothermic engines, preferably turbocharged, whose power should necessarily be very high in order to move the vehicles on which they are mounted, that are usually very large-sized and very heavy, above all in full load conditions.

In particular, it is very important that such engines can deliver their maximum power when the vehicles on which they are mounted need to travel on difficult routes, such as roads with steep slopes or particularly bumpy roads, both when starting or when overtaking.

At present, in order to allow an additional engine power increase, by realizing an additional acceleration or pickup, supplementary systems are known, which, in combination with the turbocharger of each engine, are suitable to sensibly increase the air intake by withdrawing the air from the braking system of the vehicles themselves, in a step preceding the activation of the turbocharger itself.

Since such supplementary systems require additional external tanks usually large-sized and capacious, a high-pressure air compressor, and also a pneumatic connection with high capacity and high exchange speed between additional tanks and engines, the mentioned supplementary systems known in the art imply a remarkable increase of the dimensions of the vehicles on which they are mounted, and also a considerable increase of production and commercialization costs of the vehicles themselves.

Moreover, since there is no high-pressure air compressor on the automobile engines, the systems known in the art can be applied only on the big engines of the industrial vehicles which are provided with air compressor for braking system. Examples of systems of the prior art are given on
- DONITZ C ET AL "Realizing a Concept for High Efficiency and Excellent Drivability: The Downsized and Supercharged Hybrid Pneumatic Engine" Society of Automotive Engineers (SAE) no. 2009-01-1326, April 2009 and
- DE102004028216
whom features are described in the preamble of claim 1.

### Summary of the invention

The aim of the present invention is therefore to overcome the drawbacks of the prior art described above.

In particular, an aim of the present invention is to realize a system applicable on endothermic engines, both of the naturally-aspired and of the turbocharged type, and suitable for guaranteeing an additional pickup acceleration to the vehicles/automobiles and to the engines themselves.

An additional aim of the present invention is to realize an additional acceleration system suitable for operating by exploiting the normal compression strokes of the endothermic engine on which it is applied.

According to the present invention an added acceleration system for a combustion engine is realized, according to claim 1.

The subject of this invention is in particular an additional acceleration system for an endothermic engine as well as an engine and a vehicle using said system, as described more fully in the claims, which are an integral part of this description.

### Brief description of the Figures

The technical details, according to the purposes mentioned above, are clearly described in the claims below, and the advantages of the invention will become more clear from the following detailed description given with reference to the figures attached hereto in which a preferred but non-limitative embodiment of the system is shown, in which:
- figure 1 shows a schematic view, partially a section view and with some parts removed for the sake of clarity, of a preferred embodiment of the additional acceleration system according to the present invention, applied on a endothermic engine; and
- figure 2 shows a further schematic view of a detail of the system according to the invention.

### Detailed description of preferred embodiments of the invention

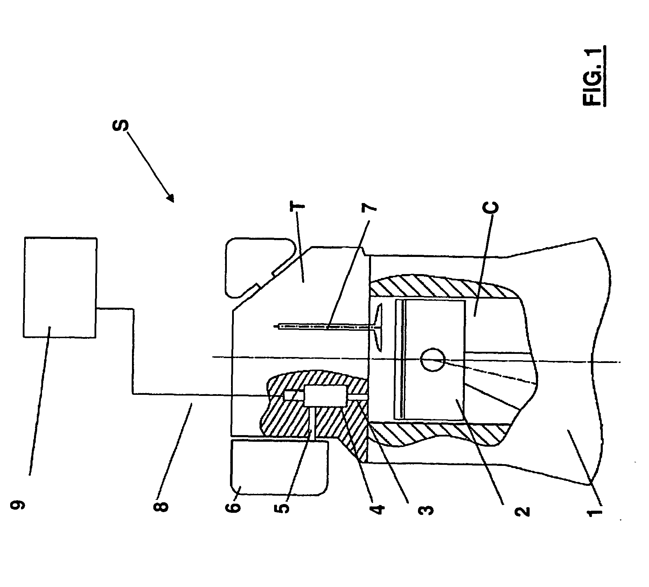

With reference to the attached figure 1, S generally indicates an additional acceleration system of an endothermic engine 1, which in the following description, for the sake of clarity, is schematically described with only a single cylindrical compression and combustion chamber C, inside which a respective piston 2 is suitable to move according to a reciprocating motion, after the air intake, by means of the intake valve 17, and the fuel injection, and their subsequent compression which generates the known step of combustion. According to what is also shown in figure 1, the system S comprises, in correspondence of the cylinder head T which defines the chamber C, a first solenoid valve 4, which is connected to the chamber C itself by means of a channel or of a pipe 3, and on the opposite side to a tank 6 suitable for containing compressed air, by means of a channel or of a pipe 5. The tank 6 is preferably directly connected to the head T or it is integrated in the casting of the head T, therefore being part of the cylinder head itself.

The mentioned solenoid valve 4 is driven by the electronic control unit, indicated by 9 in figure 1, by means of the electric connection 8, both being part of the system S.

When an additional pickup phase is required to the engine 1 (for example when the vehicle or the automobile on which the engine 1 is mounted is travelling on a road with a steep slope), the compressed air contained in the tank 6 is introduced with a high pressure directly into the cylinder C before the fuel injection into the chamber C itself.

As a direct consequence, it is possible to inject a considerable additional amount of fuel into the chamber C, generating a fast pickup of the engine RPM and therefore providing a optimal and fast pickup acceleration to the endothermic engine 1.

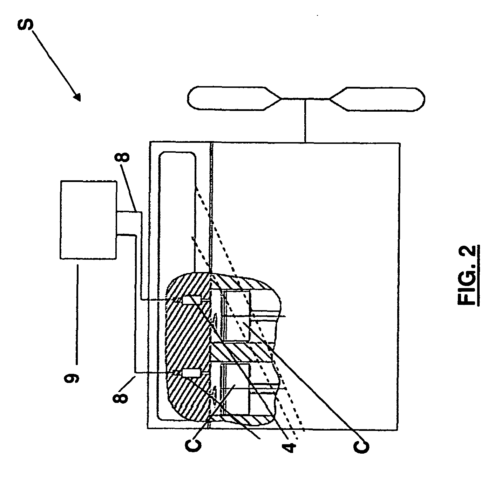

It is worth noting that in case a further increase of the air pressure in tank 6 is necessary, the mentioned solenoid valve 4 is opened so that the air withdrawn from the chamber C and compressed by the piston may circulate in the mentioned pipes 3 and 5 after the combustion phase, in order to reach the inside of the tank 6 itself. Thus the lack of air occurring at low RPM, in case of a turbocharged engine, is compensated. Figure 2 shows an engine 1 having two cylinders C, but the engine may be equipped with any number of cylinders. The system S comprises a solenoid valve 4 applied to each cylinder C, the whole thing being managed by the control unit 9.

The invention thus contrived can be subjected to numerous variations or modification, without departing from the scope of the claims.

## Claims

1. Additional acceleration system (S) for a combustion engine (1) of a vehicle, comprising means (3,4,5) for an additional air intake to the cylinders of said engine (1), said intake means (3,4,5) comprising means (4,5) for withdrawing compressed air from means (6) for containing compressed air, and intake means (3) suitable for introducing said compressed air directly in each one of said cylinders before the fuel injection, management and control means (9) of the intake means configured for managing a pickup phase, when the vehicle on which the engine (1) is mounted is travelling on a road with a steep slope, so as the compressed air contained in the means (6) for containing compressed air is introduced with a high pressure directly into the cylinders; the system being **characterized in that** said means (6) for containing compressed air are directly coupled to or are an integral part of a cylinder head (T) of said cylinders.

2. System according to claim 1, wherein said engine (1) is a turbocharged engine.

3. System according to claim 1, wherein said engine (1) is a naturally-aspired engine.

4. System according to any of the previous claims from 1 to 3, wherein said intake means (4,5) comprise valve means (4) suitable to allow the passage of the air coming from said containing means (6).

5. System according to claim 4, wherein said valve means (4) are suitable to allow the passage of the air from said cylinder of said engine (1) to said containing means (6) by means of conducting means (3) connected to said cylinders.

6. Vehicle for the commercial or industrial hauling, or specialty vehicle, or automobile, comprising the additional acceleration system according to any of the previous claims from 1 to 5.

7. Combustion engine(1), comprising the additional acceleration system according to any of the claims from 1 to 5.

## Patentansprüche

1. Zusätzliches Beschleunigungssystem (S) für eine Brennkraftmaschine (1) eines Fahrzeugs, umfassend Mittel (3, 4, 5) für einen zusätzlichen Lufteinlass in die Zylinder der Maschine (1), wobei die Einlassmittel (3, 4, 5) Mittel (4, 5) zum Abziehen von Druckluft von Mitteln (6) zur Aufnahme von Druckluft und Einlassmittel (3) umfassen, die zum Einleiten der Druckluft direkt in einen jeden der Zylinder vor der Kraftstoffeinspritzung geeignet sind, Management- und Steuermittel (9) der Einlassmittel, die ausgestaltet sind, um eine Aufnahmephase zu managen, wenn das Fahrzeug, an dem die Maschine (1) montiert ist, auf einer Straße mit einer steilen Steigung fährt, so dass die Druckluft, die in den Mitteln (6) zur Aufnahme von Druckluft enthalten ist, mit einem hohen Druck direkt in die Zylinder eingeleitet wird; wobei das System **dadurch gekennzeichnet ist, dass** die Mittel (6) zur Aufnahme von Druckluft direkt mit einem Zylinderkopf (T) der Zylinder gekoppelt oder ein integraler Teil desselben sind.

2. System nach Anspruch 1,
wobei die Maschine (1) eine turbogeladene Maschine ist.

3. System nach Anspruch 1,
wobei die Maschine (1) eine saugende Maschine ist.

4. System nach einem der vorhergehenden Ansprüche 1 bis 3,
wobei die Einlassmittel (4, 5) Ventilmittel (4) umfassen, die geeignet sind, den Durchtritt der Luft, die von den Aufnahmemitteln (6) kommt, zuzulassen

5. System nach Anspruch 4,
wobei die Ventilmittel (4) geeignet sind, um den Durchtritt der Luft von dem Zylinder der Maschine (1) zu den Aufnahmemitteln (6) mittels Leitungsmitteln (3), die mit den Zylindern verbunden sind, zuzulassen.

6. Fahrzeug für den kommerziellen oder industriellen Transport oder Spezialfahrzeug oder Kraftfahrzeug, das das zusätzliche Beschleunigungssystem nach einem der vorhergehenden Ansprüche 1 bis 5 umfasst.

7. Brennkraftmaschine (1), die das zusätzliche Beschleunigungssystem nach einem der Ansprüche 1 bis 5 umfasst.

## Revendications

1. Système d'accélération additionnel (S) pour un moteur à combustion (1) d'un véhicule, comprenant des moyens (3, 4, 5) pour une admission d'air additionnelle dans les cylindres dudit moteur (1), lesdits moyens d'admission (3, 4, 5) comprenant des moyens (4, 5) permettant de retirer de l'air comprimé des moyens (6) pour contenir l'air comprimé, et des moyens d'admission (3) adaptés pour introduire ledit air comprimé directement dans chacun desdits cylindres avant l'injection de carburant, des moyens de gestion et de commande (9) des moyens d'admission configurés pour gérer une phase de reprise, lorsque le véhicule sur lequel le moteur (1) est monté circule sur une route en pente raide, de sorte que l'air comprimé contenu dans les moyens (6) pour contenir l'air comprimé est introduit à haute pression directement dans les cylindres ; le système étant **caractérisé en ce que** lesdits moyens (6) pour contenir l'air comprimé sont directement couplés à ou constituent une partie solidaire d'une culasse (T) desdits cylindres.

2. Système selon la revendication 1, dans lequel ledit moteur (1) est un moteur à turbocompresseur.

3. Système selon la revendication 1, dans lequel ledit moteur (1) est un moteur à alimentation atmosphérique.

4. Système selon l'une quelconque des revendications précédentes 1 à 3, dans lequel lesdits moyens d'admission (4, 5) comprennent des moyens de soupape (4) adaptés pour permettre le passage de l'air en provenance dudit moyen de conteneur (6).

5. Système selon la revendication 4, dans lequel lesdits moyens de soupape (4) sont adaptés pour permettre le passage de l'air dudit cylindre dudit moteur (1) vers ledit moyen de conteneur (6) au moyen de moyens de conduite (3) raccordés auxdits cylindres.

6. Véhicule pour la traction commerciale ou industrielle, ou pour un véhicule de spécialité ou une automobile, comprenant le système d'accélération additionnel selon l'une quelconque des revendications précédentes 1 à 5.

7. Moteur à combustion (1), comprenant le système d'accélération additionnel selon l'une quelconque des revendications 1 à 5.
